# EUROPEAN PATENT APPLICATION

(11) **EP 0 664 550 A2**
(43) Date of publication of application: **26.07.1995**
(21) Application number: 95100131.2
(22) Date of filing: 05.01.1995
(51) Int. Cl.: H01H 33/66

(54) **Vacuum valve**

(30) Priority: 21.01.1994 JP 4936/94
(71) Applicant: HITACHI, LTD., Chiyoda-ku, Tokyo 101 (JP)
(72) Inventor: Kobayashi, Masato, Hitachi-shi, Ibaraki 316 (JP); Tanimizu, Toru, Hitachi-shi, Ibaraki 319-12 (JP); Hakamata, Yoshimi, Hitachi-shi, Ibaraki 316 (JP)
(74) Representative: Strehl Schübel-Hopf Groening & Partner

(57) **Abstract**

A small-sized vacuum valve has an electrode structure in which firm contact force is established by making electrode contact by mechanical engagement. One (5) of a pair of electrodes (5, 6) has a fixed cylindrical portion with an open part (5D) and a contact part (5C) at an end of the cylinder and a plurality of slits (14), each having a constant inclination angle to an axis of the cylinder, formed on the side wall of the cylindrical portion. In the other electrode (6), the central part is shaped to be convex, and a slant part (6A) is formed on the edge of the convex part so as to engage mechanically with the contact part (5C) of the former electrode (5).

## Description

### Background of the Invention

The present invention relates to the vacuum valve in the circuit breaker, especially to the structure of the main electrode of the vacuum valve.

In the vacuum valve of the circuit breaker in the prior art, a pair of main electrodes are placed in the vacuum vessel which is sealed so that the internal vacuumed gas and atmospheric air may not be exchanged, and they could be so operated that they can be discontacted under the high voltage and the high load current conditions. For example, there is a prior art disclosed in Japanese Laid-Open Patent No. 89126(1989). In the following, by referring to FIG. 4, the prior art will be described.

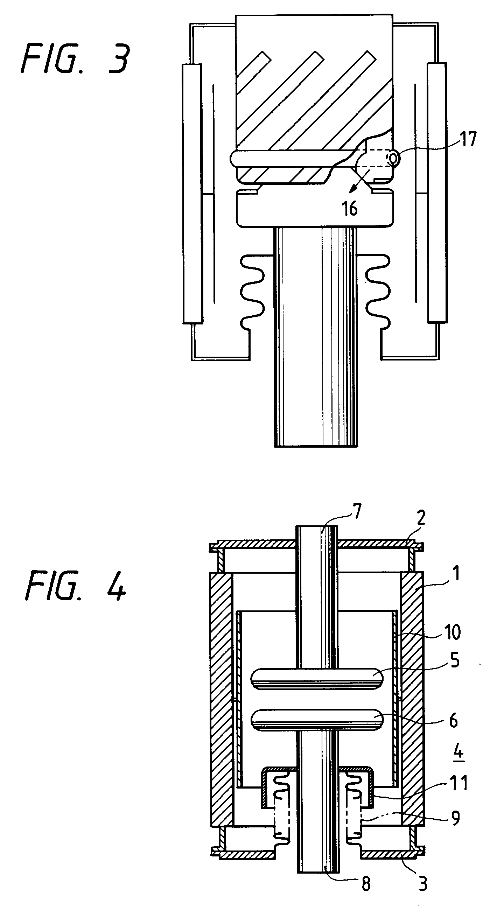

FIG. 4 is a schematic diagram showing the structure of the vacuum valve in the prior art.

As shown in FIG. 4, the vacuum valve 4 of the breaker is formed so that the end plates 2 and 3 may seal the open parts at the insulation cylinder 1.

Inside the vacuum valve 4, a fixed electrode 5 which can be discontacted to each other and a movable electrode 6 are placed so that they face to each other. The fixed-side rod 7 of the fixed electrode 5 is mounted and fixed in the end plate 2, and movable-side rod 8 of the movable electrode 6 is inserted and mounted in the end plate 3 so as to move freely with bellows 9.

The intermediate shield 10 surrounding the electrodes 5 and 6 is fixed inside the insulation cylinder 1 with a designated mechanism. The bellows shield 11 is fixed in the movable-side rod 8.

By pushing forward and backward the movable-side rod 8 with the actuator (not shown), the electrode 6 is moved, and the contact between the fixed electrode 5 and the movable electrode 6 is released and they are disconnected, and thus, the breaker shuts down the circuit. When the electric current runs through the contacting point through the electrodes 5 and 6, their faces are contacted directly to each other by the press force generated by the wipe coil of the actuator.

In the structure of the contactor used in the gas-insulated switchgear (GIS), one electrode is inserted into the other electrode in the contact operation. The later electrode has "Multiple-Pedal" structure, in other words, "Tulip Contact method", in which a plurality of segmented contactors are arranged on the circle and the former electrode is inserted in the circle and caught by the segmented contactors so that enough contact force to be applied in the direction from the outer side of the circle to the center may be established between the surface of the inserted contactor and the segmented contactors.

In the electrodes of the vacuum valve in the prior art, the contact between electrodes is a the face-to-face contact. In case of a large amount of electric current running in a short period of time, the electro-magnetic reactive force is developed between the electrodes 5 and 6. In order to keep the contact between the electrodes firmly durable to this reactive force, it is required to make a strong contact force applied between the electrodes 5 and 6.

In general, the contact resistance is generated between adjacent faces contacting each other, and when the contact resistance is greater, the voltage drop at the friction faces of the contactors occurs and the temperature of the friction faces increases. Thus, it is necessary to increase the contact force in order to reduce the contact resistance.

For the greater contact force, it is necessary to use a larger actuator , which requests a stronger and more rigid mechanical structure for the electrodes of the vacuum valve.

In addition, in the contacting operation of the electrodes, it is difficult to establish a complete face-to-face contact between the electrodes due to subtle roughness of the surface of the electrodes, and hence, contact resistance makes larger because of a plurality of point-to-point contact. In case that the complete alignment of the rod axis is not established, the shape of the surface of the electrodes could not maintained to be uniform due to the collision force non uniformly developed between the electrodes, and therefore, the effective area for the contact between the electrodes becomes extremely small, which leads to the increase in the contact resistance.

When making the surfaces of metal, each cleaned well in a vacuum, contact to each other, the surfaces suffer from cohesive and adhesive phenomena, and therefore, the surface of metal can not be moved in frictional action. Therefore, in the vacuum valve, there is a problem that the structure of the contactor used commonly in GIS in which one electrode is made to be inserted into the other electrode and to be released with frictional movement could not directly adopted.

### Summary of the Invention

The present invention is aimed for the solution to the above mentioned problem in the prior art. The object of the present invention is to provide a small-sized vacuum valve which has an electrode structure in which one of the electrodes has an open part, and a plurality of slits are formed on the side of the electrode, and each slit has a constant inclination to the axis of the electrode rod, and the top of the other electrode has a plurality of projections inclined corresponding to the inclined slits of the former electrode, so that the inclined parts may be engaged to establish a firm contact force.

The structure of the vacuum valve of the present invention in order to achieve the above objective is in the following;

The vacuum valve is composed of
a vacuum vessel formed as a cylinder composed of insulation material sealed with an end plate at the both end sides;
a pair of main electrodes placed in the vacuum vessel, each disengaged relatively; and
a rod extended from the back side of the electrode to the outside of the vacuum vessel;
In one of the paired main electrodes, there is a cylindrical electrode having an open part and a contact part on the one end side of the main electrode, and a plurality of slits, each having a constant inclination angle to the axis of the cylindrical electrode, are formed on the side wall of the cylindrical electrode;

In the other of the paired main electrodes, the central part of the electrode is shaped to be convex, and a slant part is formed on the edge of the convex part so that the slant part of the one main electrode may be engaged with the contact part of the cylindrical wall of the other main electrode.

The contact part of the cylindrical electrode is shaped in a circular arc.

The cylindrical electrode of the main electrodes contains phosphorus and magnesium in a very small quantity.

The cylindrical electrode of the main electrodes contains chromium in a very small quantity.

A ceramic spring is mounted on the side wall of the cylindrical electrode of the main electrodes
The functions supplied by the combination of the individual technical means mentioned above are the following.

By forming a plurality of slits on the side wall of the cylindrical electrode having a contact part shaped in a circular arc, each slit inclined in relative to the axis of the cylinder, the diameter of the open part of the cylinder can be varied flexibly in the radial direction, and as the cylindrical-shaped electrode and the convex-shaped electrode come closer and contact to each other, the open part of the cylinder opens wider and catches and engages the convex-shaped electrode with the elastic force developed by the slits of the cylindrical-shaped electrode. This makes it possible to establish the contact force in the radial direction, for example, with less force developed by the wipe coil.

In addition, as the both electrodes are engaged at a slanted face, the engagement is not subject to the outer force or vibration.

As there are slits formed on the side wall of the cylindrical-shaped electrode, many contact points are insured, and owing to the elasticity of slits, the electric contact is established with less contact resistance in spite of the existence of roughness of the surface of contactors.

As for the material used for the cylindrical-shaped electrode, by adding phosphorus, magnesium and others in a very small quantity into the main component metal, copper, the elasticity of the conductor lines can be made to be increased, and hence, the contact force between the electrodes can be increased.

In addition, by mounting the ceramic spring at the upper part of the side wall of the open part of the cylindrical-shaped electrode, the contact force developed in the radial direction can be increased.

By forming slits on the side wall of the cylindrical-shaped electrode to be slanted with a constant angle against the axis of the cylinder, the subsidiary magnetic field is generated, which deflects and rotates the arc beam, and finally annihilates the arc beam.

### Brief Description of the Drawings

FIG. 1 is a schematic diagram of the structure of the vacuum valve in the embodiment of the present invention.

FIG. 2 shows an inner structure of the vacuum valve in the embodiment of the present invention.

FIG. 3 shows a schematic diagram of the structure of the vacuum valve in the embodiment of the present invention.

FIG. 4 shows a schematic diagram of the structure of the vacuum valve in the prior art.

### Description of the Preferred Embodiments

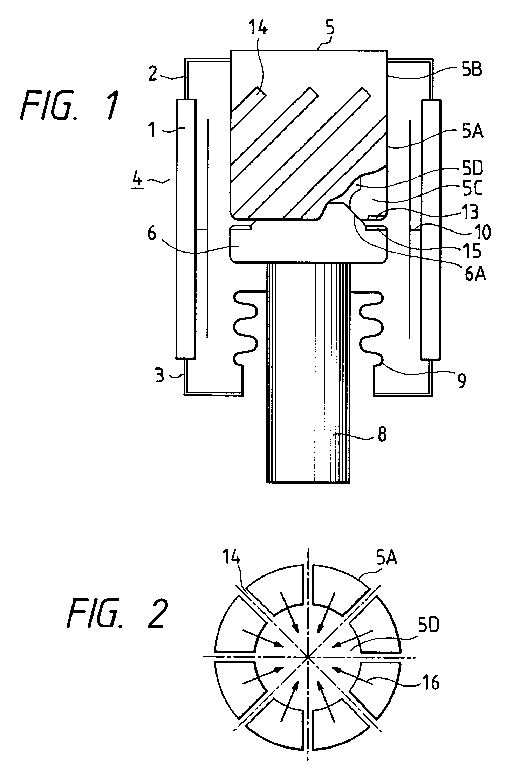

With FIGS. 1, 2 and 3, each embodiment of the present invention will be described.

Numeral 1 denotes a insulation cylinder, 2 and 3 respectively end plates, 4 vacuum valve, 5 fixed electrode, 5A cylindrical part of the fixed electrode 5, 5B rod part of the fixed electrode 5, 5C contact part of the fixed electrode 5, 5D open part of the fixed electrode 5, 6 movable electrode, 6Aslant part of the movable electrode 6, 7 rod at the fixed electrode, 8 rod at the movable electrode, 9 bellows, 10 intermediate shield, 11 bellows shield, 13 guard metal of the fixed electrode, 14 inclined slit, 15 guard metal of the movable electrode, 16 contact force developed in the centripetal direction, and 17 circular ceramic coil.

FIG. 1 is a schematic diagram of the structure of the vacuum valve in the embodiment of the present invention. FIG. 2 shows an inner structure of the vacuum valve in the embodiment of the present invention. FIG. 3 shows a schematic diagram of the structure of the vacuum valve in the embodiment of the present invention.

At first, the overall structure of the vacuum valve 4 is described.

The vacuum valve 4 has both open end part of the insulation cylinder 1 which is closed and sealed with the end plates 2 and 3.

In the vacuum vessel 4, a fixed electrode 5 which can be discontacted to each other and a movable electrode 6 are placed so that they face to each other.

The fixed electrode 5 has a single body structure composed of the cylinder part 5A and the rod part 5B. The rod part 5B is mounted and fixed in the end plate 2, and the movable-side rod 8 of the movable electrode 6 is inserted and mounted in the end plate 3 so as to move freely with bellows 9. The intermediate shield 10 surrounding the electrodes 5 and 6 is fixed inside the insulation cylinder 1.

Next, the electrodes 5 and 6 are described in detail.

The movable electrode 6 has a contact part on the outer rim edge on the end face of itself facing to the fixed electrode 5, which is shaped in a ring and slanted face 6A, and the flat ring part outside the slanted face 6A is formed in part with guard metal 15.

The inside central portion of the slanted face is convex and contacts with the fixed electrode 5. The appearance of the fixed electrode 5 is like a sylindrical part 5A and the end thereof forms a rod 5B. In an inside of the sylindrical part close to the guard metal 15, the contact part 5C is protruded and contacts with the slanted face 6A. An opposite face of the fixed electrode opposite to the guard metal 15, a guard metal 13 is provided. A plurality of slanted slits are formed in a direction from the face of the fixed electrode 5 opposite to the movable electrode to the outside of the rod 5B. The slanted face 6A moves so as to push and contact with the contact part 5C, thereby the slanted slits 14 are pushed with contact forth 16 as shown with arrows in Fig. 2.

Further, in order to increase the contact forth 16, a ceramic spring shaped as a ring may be provided on an outside surface of the slanted slits as shown in Fig. 3.

The open part 5D is formed on the end face of the fixed electrode 5A facing to the movable electrode 6, and a plurality of inclined slits 14 are formed on the outer side wall of the cylinder part 5A.

In addition, the outer end part of the cylinder part 5A is so shaped that the contact part 5C between the fixed electrode 5 and the movable electrode 6 may be formed. The contact part 5C is shaped in a circular arc, a part of which engages guard metal 13.

Now, referring to FIGS. 2 and 3, the operation of the vacuum valve 4 is described.

When the circuit is close or on for electric current transmission at the vacuum valve 4, the fixed electrode 5 and the movable electrode 6 contact to each other. More precisely, the slanted face 6A of the movable electrode 6 and the circular arc part of the contact part 5C contact to each other.

As the slanted face 6A generates a force to the open part 5D so as to make the open part 5D open wider, the elastic force given by the cylinder part 5A leads to the contact force 16 applied in the centripetal direction, and the circular arc part of the contact part 5C is pressed against the slanted face 6A.

When the circuit is open or off for electric current transmission at the vacuum valve 4, the arc beam generated between the slanted face 6A and the contact part 5C is deflected and rotated by the subsidiary magnetic field generated by the cylindrical coil electrode composed of the cylinder part 5A and a plurality of inclined slits 14, and finally, annihilated by the guard meals 13 and 15 located at the outer rim edge of the electrodes.

In order to increase the elasticity of the cylinder part 5A, it is preferable to add phosphorus, magnesium and others in a very small quantity into the main component metal, copper, for the material for the electrodes. With this material component, the contact force 16 to be developed in the centripetal direction can be increased.

In order to increase the rigidity of the cylinder part 5A, it is preferable to add chromium in a very small quantity into the main component, copper, for the material for the electrode. With this material component, the contact force 16 to be developed in the centripetal direction can be increased.

Above described embodiment is one example of the present invention, and the spirits of the present invention is not limited within it, but may be modified in various forms.

For example, as shown in FIG. 3, a circular-ring-shaped ceramic spring 17 may be place on the cylinder part 5A above the contact face and its neighboring area of the fixed electrode 5. With this circular-ring-shaped ceramic spring 17, the contact force 16 to be developed in the centripetal direction can be increased.

With this present invention, it will be appreciated to provide a small-sized vacuum valve which has an electrode structure in which one of the electrodes has an open part, and a plurality of slits are formed on the side of the electrode, and each slit has a constant inclination to the axis of the electrode rod, and the top of the other electrode has a plurality of projections inclined corresponding to the inclined slits of the former electrode, so that the inclined parts may be engaged to establish a firm contact force.

## Claims

1. A vacuum valve comprising a pair of electrodes (5, 6) disposed in a vacuum vessel (1) and being adapted to engage each other and disengage from each other,
wherein one (5) of said electrodes (5, 6) has a cylindrical end portion defining an open part (5D) and a contact part (5C) and being provided with a plurality of slits (14), and
the other one (6) of said electrodes (5, 6) has a convex central portion defining a conical surface (6A) for engagement with the contact part (5C) of said one electrode (5).

2. The vacuum valve of claim 1, wherein said slits (14) are inclined with respect to the axis of the cylindrical end portion of said one electrode (5).

3. A vacuum valve comprising
a vacuum vessel formed as an insulation cylinder (1) with its both side ends sealed by end plates (2, 3), at least one pair of main electrodes (5, 6) placed in said vacuum vessel, each disengaged relatively, and a rod (7, 8) extending from the back of each electrode (5, 6) to outside of said vacuum vessel, wherein
one (5) of said paired main electrodes (5, 6) has a structure including a cylindrical portion having an open part (5D) and a contact part (5C) on one end of the main electrode, and a plurality of slits (14) each having a constant inclination angle to an axis of said cylindrical portion, formed on the side wall of the cylindrical portion; and
the other (6) of said paired main electrodes (5, 6) has a structure including a central part shaped to be convex; and a slant part (6A) formed on an edge of said convex part so that said slant part may be engaged with said contact part (5C) of said cylindrical wall of said one main electrode (5).

4. The vacuum valve of any one of claims 1 to 3, wherein said contact part (5C) of said one electrode (5) is shaped in a circular arc.

5. The vacuum valve of any one of claims 1 to 4, wherein said cylindrical portion of said one electrode (5) contains phosphorus and magnesium in very small quantities.

6. The vacuum valve of any one of claims 1 to 4, wherein said cylindrical portion of said one electrode (5) contains chromium in a very small quantity.

7. The vacuum valve of any one of claims 1 to 6, wherein a ceramic spring (17) is mounted on the side wall of said cylindrical portion of said one electrode (5).
